# EUROPÄISCHE PATENTSCHRIFT

(11) **EP 2 922 654 B1**
(45) Veröffentlichungstag und Bekanntmachung des Hinweises auf die Patenterteilung: **25.03.2020**
(21) Anmeldenummer: 13795198.4
(22) Anmeldetag: 14.11.2013
(51) Int. Cl.: B23C 5/14, B23C 3/34

(54) **GLOCKENFRÄSER**
BELL-SHAPED CUTTER
FRAISE-CLOCHE

(30) Priorität: 26.11.2012 DE 102012111401
(43) Veröffentlichungstag der Anmeldung: 30.09.2015
(73) Patentinhaber: Walter AG, 72072 Tübingen (DE)
(72) Erfinder: SCHÄDLE, Walter, 72108 Rottenburg (DE)
(74) Vertreter: WSL Patentanwälte Partnerschaft mbB
(86) Internationale Anmeldenummer: PCT/EP2013/073781
(87) Internationale Veröffentlichungsnummer: WO 2014/079760

(56) Entgegenhaltungen:
- EP-A1- 1 629 915
- WO-A1-2008/138718
- DE-A1- 4 214 498
- DE-C1- 19 607 230
- DE-T2-602004 007 139
- US-A1- 2009 214 351

## Beschreibung

Die vorliegende Erfindung betrifft einen Glockenfräser zur Herstellung von bogenförmigen und vorzugsweise profilierten Nuten, mit einem kreisscheibenförmigen Grundkörper und mehreren, sich im wesentlichen senkrecht zur Ebene des Grundkörpers erstreckenden Schneidenträgern, die entlang einer Kreisbahn um das Zentrum des Grundkörpers in Umfangsrichtung hintereinander angeordnet und lösbar an dem Grundkörper montiert sind..

Im Stand der Technik hat ein Glockenfräser die Form eines an einer Stirnseite geschlossenen Hohlzylinders und dementsprechend der Schneidenträger in dieser Variante die Form eines Zylindermantels, wobei dieser Zylindermantel allerdings im Profil im Allgemeinen keinen konstanten Innen- oder Außendurchmesser aufweist, sondern einen mit der axialen Richtung variierenden Innen- oder Außendurchmesser hat, und sowohl an der Außenseite als auch an der Innenseite und der freien Stirnseite Aussparungen für Spanräume und für Schneidplatten aufweist, die so angeordnet werden, dass ihre Schneidkanten gemeinsam ein gewünschtes Nutprofil definieren. In der vorliegenden Beschreibung wird der Begriff "Zylindermantel" bzw. "Hohlzylinder" in diesem verallgemeinerten Sinne verwendet, der auch profilierte und strukturierte Wände umfasst..

Bei der Herstellung entsprechender Nuten wird der Glockenfräser axial auf ein Werkstück zugeführt, welches beispielsweise in Form eines im Querschnitt rechteckigen Steges vorliegen kann, in welchen von einer Seite her entsprechende Nuten eingefräst werden, wobei aufgrund der Tatsache, dass der Schneidträger ein geschlossener, annähernd zylindrischer Körper ist, die Nuten in der Draufsicht entsprechend der Krümmung des annähernd hohlzylinderförmigen Schneidenträgers bogenförmig verlaufen.

Gemäß einer anderen Variante ist der Zylindermantel der Glocke in mehrere getrennte Elemente aufgelöst, so dass in diesem Fall an dem Grundkörper mehrere Schneidenträger vorgesehen sind, die in Aussparungen des Grundkörpers entlang einer Kreisbahn um das Zentrum des Grundkörpers in Umfangsrichtung hintereinander angeordnet und unabhängig voneinander lösbar an dem Grundkörper montiert sind.

Derartige Glockenfräser werden typischerweise verwendet für die Herstellung der Aufnahmenuten an Turbinennaben die für das formschlüssige Einsetzen bzw. Aufnehmen sogenannter "Turbinenfüße" vorgesehen sind, die für die Verbindung von Turbinenschaufeln mit der Turbinennabe dienen. Die Turbinennaben weisen für diesen Zweck umlaufende Stege oder Bünde auf, die zumeist im (auf die Nabe bezogen axialen) Querschnitt eine Rechteckform haben. Die Nuten werden im Wesentlichen quer zur Umfangsrichtung der Nabe in die Stege eingefräst, verlaufen aber aufgrund der Herstellung mithilfe des Glockenfräsers nicht exakt axial (bezüglich der Nabe), sondern bogenförmig gekrümmt mit einer überwiegend axialen Komponente. Die Achse des Glockenfräsers verläuft dabei in einer Ebene senkrecht zur Achse der Turbinennabe, jedoch versetzt zu dieser Achse. Die Ebene, welche die Fräserachse enthält, wird dabei im Allgemeinen auch zentral durch den jeweiligen Steg verlaufen, in welchen die Nuten eingefräst werden, kann aber auch relativ zu dem Steg in axialer Richtung versetzt sein.

Ein Glockenfräser erstgenannten Art ist aus der DE 196 07 230 bekannt, wobei für das Verständnis des technischen Hintergrundes und der vorstehenden Beschreibung vor allem auf die Figuren und die zugehörige Beschreibung dieses Dokumentes verwiesen wird. Die daraus unmittelbar abzuleitenden Erkenntnisse werden im Folgenden als grundlegende Kenntnisse vorausgesetzt.

Die an der Turbinennabe zu befestigenden Turbinenschaufeln weisen an ihren Turbinenfüßen entsprechende Gegenprofile auf, die passend in die bogenförmigen Nuten bzw. Nutprofile an den Stegen der Turbinennaben eingeführt werden können. Die Nuten und die dazwischen verbleibenden Rippen, einerseits der Turbinennabe und andererseits der Turbinenfüße der Turbinenschaufel, greifen dabei wechselseitig und vorzugsweise formschlüssig ineinander ein und sichern so die Turbinenschaufel an der Turbinennabe.

Es versteht sich, dass die entsprechenden Nuten an den Turbinenfüßen der Turbinenschaufeln ebenso wie an den Halterungen der Turbinennabe sehr sorgfältig und präzise hergestellt werden müssen, damit jede einzelne Turbinenschaufel im montierten Zustand exakt die gewünschte Position und Ausrichtung an der Turbinennabe hat und auch bei hohen Drehzahlen der Turbine sicher an der Nabe gehalten wird.

Wegen der geforderten sehr hohen Passgenauigkeit für einen sicheren und gleichzeitig exakt definierten Sitz der Turbinenfüße muss auch ein entsprechender Glockenfräser sehr exakt gefertigt sein, da er im Allgemeinen mit einer Vielzahl aufeinanderfolgender Schneidelemente, die entlang des gesamten hohlzylindrischen Mantels verteilt sind, in das Werkstück eingreift, um die entsprechenden Nuten zu erzeugen, die häufig zum Beispiel ein sogenanntes "Tannenbaumprofil" haben, wie es unter anderem in der DE 196 07 230 dargestellt ist.

Ein solches Profil wird oft in mehreren Arbeitsgängen erzeugt, wobei in einem ersten Schritt nur ein mehrfach abgestufter, pyramidenförmiger Querschnitt erzeugt wird, der dann zunächst nur auf einer Nutflanke und dann auf der anderen Nutflanke mit entsprechenden Hinterschnitten versehen wird, um insgesamt das gewünschte Tannenbaumprofil zu erzeugen, welches eine formschlüssige Verbindung mit entsprechenden, tannenbaumförmig ausgebildeten Zapfen oder Fingerstrukturen eines Turbinenschaufelfußes ermöglicht.

Die Hinterschneidungen sind deshalb jeweils nur einseitig zu erzeugen, weil das Werkzeug (auf den Fräser bezogen) axial in die Nut eingefahren werden muss und dann erst radial (bezüglich der Fräserachse) relativ zum Werkstück verschoben wird, um die Hinterschneidungen in die Nutflanke einzufräsen. Diese nacheinander ablaufenden Arbeitsschritte erfordern eine entsprechend genaue und reproduzierbare Anordnung und Ausrichtung der Schneidplatten an dem Schneidenträger.

Um eine ausreichende Produktivität zu erzielen, ist im Stand der Technik eine entsprechende Vielzahl von Schneidplatten entlang des Umfanges des in etwa zylindermantelförmigen Schneideträgers vorgesehen. Die Schneidplatten, die entlang des Umfangs verteilt sind und jeweils den gleichen Nutabschnitt erzeugen, müssen dementsprechend genau positioniert sein. Dies bedeutet auch eine entsprechend genaue Ausformung der Sitze für entsprechende Schneidplatten. Dies gilt auch für die Variante, bei welcher einzelne Schneidenträger individuell in Aussparungen am Umfang eines Grundkörpers montierbar sind und die Ihrerseits Taschen bzw. Aussparungen zur Aufnahme von Schneidplatten bzw. Schneideinsätzen dienen. Auch bei dieser Variante sind die Schneidenträger und der Grundkörper jeweils nur für die Herstellung von bogenförmigen Nuten mit einem einzigen, festen Bogenradius ausgelegt.

Die Herstellung von bogenförmigen Nuten in Turbinennaben ist deshalb sehr aufwändig und teuer, da für jeden Bogenradius ein eigener Glockenfräser angefertigt bzw. bereitgehalten werden muss.

Die DE 42 14 498 A1 beschreibt einen zur Verwendung bei einem Wirbelaggregat bestimmten ringartigen Werkzeugträger, wobei mit Schneidplatten bestückte Werkzeughalter in lösbar an dem ringartigen Werkzeugträger befestigten Werkzeugkassetten angeordnet sind, wobei die Werkzeugkassetten in radial verlaufenden Nuten des Werkzeugträgers festlegbar sind, wobei der Werkzeughalter in Bohrungen einer Werkzeugkassette festlegbar ist, welche Bohrungen im montierten Zustand der Werkzeugkassette tangential zu dem Werkzeugträger orientiert sind und wobei die Schneidplatten der Werkzeughalter in einem mit Abstand von der Stirnseite des Werkzeugträgers gelegenen Ebene gehalten sind.

Die DE 60 2004 007 139 T2 betrifft ein drehendes Axialstechwerkzeug für Metallbearbeitungsvorgänge des Typs, bei dem austauschbare Schneideinsätze in radial und axial einstellbaren Kassetten gehalten werden.

Die EP 1 629 915 A1 beschreibt einen Drehwerkzeughalter zum Mehrkantdrehen, wobei der Werkzeughalter drehend antreibbar ist und mehrere, über den Umfang verteilt angeordnete Schneiden aufweist. Der Drehwerkzeughalter ist mit lösbar befestigten Einzelhaltern ausgebildet, die Schneidplatten halten.

Die WO 2008/138718 A1 ein Kegelradschneidwerkzeug mit auf Schneidenträgern angeordneten Schneidelementen, wobei die Schneidenträger auf einem kreisscheibenförmigen Werzeuggrundkörper in radialen Schlitzen stufenlos verschiebbar und fixierbar sind. Die Einstellung einer Mehrzahl von Schneidenträgern auf einer gemeinsamen radialen Position ist zeitaufwendig und schwierig.

Gegenüber diesem Stand der Technik liegt der vorliegenden Erfindung die Aufgabe zugrunde, einen Glockenfräser mit den eingangs genannten Merkmalen zu schaffen, welcher eine vereinfachte und kostengünstigere Herstellung von Bogennuten ermöglicht, ohne auf die präzise Anordnung und Ausrichtung der Schneidplatten der bekannten Glockenfräser verzichten zu müssen.

Diese Aufgabe wird gelöst durch einen Glockenfräser gemäß Anspruch 1 gelöst. Dieser Glockenfräser weist unter anderem Positioniereinrichtungen mit in der Draufsicht sektorförmigen Positioniermodulen mit axial und überwiegend radial verlaufenden Flankenflächen auf, die auf einer im Wesentlichen senkrecht zur Rotationsachse verlaufenden Fläche des Grundkörpers derart montiert sind, dass die einander zugewandten Flankenflächen benachbarter Positioniermodule parallel verlaufen und mit der senkrecht zur Rotationsachse und zu den Flankenflächen verlaufenden Fläche des Grundkörpers eine im Querschnitt rechteckige Nut definieren, wobei die Flankenflächen und/oder der Nutgrund mindestens eine Aussparung zur Aufnahme mindestens eines Nutsteins aufweisen.

Die Aussparungen und Nutsteine ermöglichen eine sehr schnelle und präzise radiale Positionierung der Schneidenträger.

Die Mehrzahl von getrennten Schneidenträgern, die in Umfangsrichtung hintereinander und im gleichen radialen Abstand angeordnet sind, ermöglicht es zum Einen, diese Schneidenträger jeweils getrennt vorzuformen und auf einer Werkzeugmaschine endgültig herzustellen, wobei eine relativ große Genauigkeit der Formen und Maße des einzelnen Schneidenträgers erzielt werden kann. Dadurch ist es nicht erforderlich, den relativ großen, scheibenförmigen Grundkörper zusammen mit dem entsprechenden, sich in Form eines Zylindermantels am Außenumfang des Grundkörpers erstreckenden Schneidenträger gleichzeitig herzustellen, was nur mit großem Aufwand auf speziellen Maschinen möglich ist. Stattdessen wird nur noch der scheibenförmige Grundkörper getrennt von den Schneideträgern hergestellt und die Schneidenträger werden vorzugsweise jeweils identisch hergestellt und sind dabei wegen ihrer deutlich reduzierten Größe gegenüber dem kompletten Werkzeug wesentlich einfacher handhabbar und mit weniger Aufwand genau herstellbar als die aus Grundkörper und hohlzylindrischem Schneidenträger bestehende und in einem Stück hergestellte komplette Glocke gemäß dem Stand der Technik.

Die Schneidenträger ihrerseits, die als unabhängig voneinander lösbare bzw. auswechselbare Module auch als "Kassette" bezeichnet werden, werden mit Hilfe von Positioniereinrichtungen Konzentrisch zur Rotationsachse des Grundkörpers an bzw. auf diesem angeordnet.

Dabei können die Positioniereinrichtungen in der Weise verwendet werden, dass sie eine Positionierung eines Schneidenträgers in unterschiedlichen radialen Abständen von der Rotationsachse ermöglicht. Es versteht sich, dass für einen vorgegebenen Bogenradius der zu fräsenden Nuten, nach wie vor ein bestimmter radialer Abstand der Schneidenträger eingestellt werden muss. Jedoch kann aufgrund der erfindungsgemäßen Merkmale ein und derselbe Grundkörper für die Herstellung von Bogennuten mit unterschiedlichen Bogenradien verwendet werden. Da der Grundkörper während des Fräsens keinen besonders hohen Belastungen und insbesondere keinem starken Verschleiß ausgesetzt ist, können durch die vielfache Verwendung eines Grundkörpers die Kosten des Werkzeugs und damit der Herstellung der Bogennuten beträchtlich gesenkt werden.

Aus der Tatsache, dass ein bestimmter radialer Abstand der Schneidenträger jeweils für einen vorgegebenen Bogenradius eingestellt werden muss und derselbe Grundkörper für die Herstellung von Bogennuten mit unterschiedlichen Radien verwendet werden soll, ergibt sich, dass mit Positioniereinrichtungen, die eine Montage in mehreren voneinander verschiedenen radialen Abständen ermöglichen, nicht Einrichtungen zur Feineinstellung der Schneidenträger gemeint sind, die lediglich eine Einstellung der Schneiden auf einen gemeinsamen Radius und den Ausgleich von Toleranzabweichungen ermöglichen sollen und somit innerhalb von maximalen Toleranzabweichung tatsächlich nur die Einstellungen auf einen einzigen Radius ermöglichen. Die Positioniereinrichtungen gemäß der vorliegenden Erfindung sollen angesichts der obigen Erläuterungen vielmehr die Einstellung auf definierte unterschiedliche Radien jenseits eines Toleranzausgleichs ermöglichen.

Die Positioniereinrichtungen für das Ausrichten der Schneidenträger an dem Grundkörper, insbesondere soweit sie die Einstellung unterschiedlicher radialer Positionen ermöglichen, weisen vorzugsweise im Wesentlichen sektorförmige, identische Positioniermodule auf, die vorzugsweise in gleichen, bei Bedarf aber auch in variierenden Umfangsabständen angeordnet sein können. Konkret weisen die Positioniereinrichtungen in der Draufsicht sektorförmige Positioniermodule mit axial und überwiegend radial verlaufenden Flankenflächen auf, die auf einer im Wesentlichen senkrecht zur Rotationsachse verlaufenden Fläche des Grundkörpers derart montiert sind, dass die einander zugewandten Flankenflächen benachbarter Positioniermodule parallel verlaufen und mit der senkrecht zur Rotationsachse und zu den Flankenflächen verlaufenden Oberfläche des Grundkörpers eine im Querschnitt rechteckige Nut definieren. Mit "Flankenflächen, die überwiegend radial verlaufen" und "radial verlaufenden Nuten" ist gemeint, dass das Zentrum der jeweiligen Nut oder mindestens eine zum Zentrum der Nut parallel Linie innerhalb der Nut exakt radial verläuft, während die dazu im Allgemeinen beanstandeten Flanken der Nut parallel zu dieser radialen Linie, und somit selbst nicht mehr exakt radial verlaufen. Dabei ist es unvermeidlich, dass die Nuten und damit auch die Positioniermodule, zwischen welchen die radial verlaufenden Nuten gebildet werden, radial einwärts gesehen im Abstand zur Achse des Fräsers enden.

Zweckmäßigerweise ist zwischen je einem Schneidenträger und dem Grundkörper ein Wechselbacken angeordnet, welcher eine Schnittstelle zwischen Grundkörper und Schneidenträger definiert und welcher an unterschiedlichen radialen Positionen an dem Grundkörper fixierbar ist, wobei der Schneidenträger an dem Wechselbacken montierbar oder mit diesem einstückig ausgebildet ist.

Vorzugsweise definieren benachbarte Positioniermodule zusammen mit einer radialen Fläche des Grundkörpers eine sich im Wesentlichen radial erstreckende, vorzugsweise im Querschnitt rechteckige Nut auf dem Grundkörper, in der ein passender Wechselbacken geführt ist, dessen Position wiederum die radiale Position des Schneidenträgers bestimmt. Der Wechselbacken weist also generell einen Querschnitt auf, welcher dem Querschnitt der von den Positioniereinrichtungen definierten Nuten entspricht.

In einer Ausführungsform ist vorgesehen, dass der Wechselbacken mit Kreuzversatz an den Positioniereinrichtungen fixierbar ist, Hierzu können die Flankenflächen und/oder der Nutgrund mindestens eine Aussparung bzw. Quernut zur Aufnahme mindestens eines Nutsteins aufweisen.

Der Wechselbacken kann demzufolge mehrere fest definierte radiale Positionen aufweisen, in denen er durch einen Nutstein positioniert und durch Bolzen gesichert ist, die sich durch miteinander fluchtende Bohrungen in mindestens einer Nutwand oder dem Nutgrund und durch den Wechselbacken erstrecken.
In den radial verlaufenden Nuten ist also ein an den Nutquerschnitt angepasster Wechselbacken geführt, der wiederum mit einem Schneidenträger fest verbunden werden kann und somit durch seine radiale Position auch die radiale Position des Schneidenträgers festlegt. Der Wechselbacken, der in einer der Nuten geführt ist, kann sowohl radial innerhalb als auch radial außerhalb eines Schneidenträger montiert werden, was bei einer gegebenen Länge der Nut zu einer maximalen Ausnutzung der Nutlänge für die möglichen radialen Positionen von Schneidenträgers führt. Dadurch kann mit demselben Grundkörper ein großer Bereich von Krümmungsradien für die zu erzeugenden bogenförmigen Nuten abgedeckt werden, der z. B. 300 mm betragen kann.

Es versteht sich, dass die entsprechenden Positioniermodule auch einstückig mit dem scheibenförmigen Grundkörper ausgebildet sein könnten. Ansonsten können unabhängig von den Positioniermodulen an dem scheibenförmigen Grundkörper auch weitere Teile der Positioniereinrichtungen vorgesehen sein, wie Nutensteine, Quernuten zur passgenauen Aufnahme der Nutensteine, und Bohrungen für die Befestigung von nicht mit dem scheibenförmigen Grundkörper einstückigen Positioniermodulen.

Die einzelnen Schneidplatten werden jeweils individuell an jedem der Schneidenträger montiert und anschließend werden die kompletten Schneidenträger im Sinne von "Kassetten" über die Wechselbacken in der zugehörigen Aussparung am Umfang des Grundkörpers positioniert und fixiert. Für die Fixierung können beispielsweise Gewindebohrungen in einer Wand der Aussparung vorgesehen sein, die mit Bohrungen durch den Wechselbacken des Schneidenträgers fluchten. Der Wechselbacken kann dabei wahlweise radial innerhalb des Schneidenträgers oder radial außerhalb desselben angeordnet sein. Entsprechend wird der Schneidenträger bzw. ein Befestigungsabschnitt des Schneidenträgers radial von Innen oder radial von außen mit dem Wechselbacken verschraubt.

Der Wechselbacken kann an seinen Seitenflanken und/oder seiner Unterseite mindestens eine Aussparung zur Aufnahme eines Nutsteins oder anstelle eines Nutsteins mindestens einen als Nutstein dienenden integralen Vorsprung aufweisen.

Bei Beschädigung der Schneiden können die Schneidenträger einzeln ausgebaut bzw. ausgetauscht werden.

Bei einer Umstellung auf ein anderes Profil muss nicht der gesamte Glockenfräser ausgetauscht werden, sondern man kann in einfacher Weise lediglich die Schneidenträger wechseln, während der Grundkörper jeweils der gleiche bleibt.

Zweckmäßigerweise haben die einzelnen Schneidenträger, zumindest in dem axialen Bereich, in welchem auch die Schneidplatten an dem Schneidenträger angeordnet sind, die Grundform eines Hohlzylindersegmentes, das heißt sie verlaufen in der Draufsicht entlang der Achse des Grundkörpers - ungeachtet etwaiger Profilierungen und Aussparungen - leicht bogenförmig gekrümmt mit einem Krümmungsradius, der ihrem Abstand zur Achse des Grundkörpers entspricht.

Der Umfangsabstand zwischen den Schneidenträgern beträgt zum Beispiel das 0,02- bis 1-fache der Umfangsausdehnung eines Schneidenträgers.

Durch das Anordnen der Schneidenträger im Abstand zueinander werden für die in Drehrichtung vorderen Schneidplatten jedes Schneidenträgers Spanräume gebildet, welche die Spanabfuhr bei der Bearbeitung entsprechender Turbinennaben erleichtern. Insgesamt definieren die Schneidenträger gemeinsam die Form eines abschnittweise unterbrochenen Zylindermantels des Glockenfräsers.

Für unterschiedliche Krümmungsradien der bogenförmig gekrümmten Nuten werden jeweils unterschiedliche Schneidenträger bzw. Sätze von Schneidenträgern verwendet, die speziell für einen bestimmten Krümmungsradius ausgelegt sind. Dennoch kann dabei jeweils der gleiche Grundkörper verwendet werden, und auch die Positioniereinrichtungen am Grundkörper brauchen nicht ausgetauscht, sondern nur auf eine neue Position eingestellt werden, in welcher der Abstand der Schneiden von der Achse des Glockenfräsers dem Krümmungsradius des von der jeweiligen Schneide bearbeiteten Nutabschnittes entspricht.

In einer weiteren Ausführungsform der Erfindung ist außerdem vorgesehen, dass auch die individuellen Schneidplatten an dem Schneidträger justierbar sind, das heißt radial und/oder axial verschiebbar und/oder um eine tangential zur Rotationsrichtung verlaufende Achse drehbar an dem Scheidenträger angeordnet sind.

Der Schneidenträger kann entweder unmittelbar auf einem Wechselbacken montiert sein oder er kann mit einem entsprechenden Wechselbacken einstückig ausgebildet sein.

Der Schneidenträger hat in einem die Achse des Grundkörpers enthaltenden Schnitt im Wesentlichen ein in etwa V-förmiges Profil, dessen Spitze von dem Grundkörper weg weist, wobei die Profilflanken auch mehrere Stufen, Vorsprünge und/oder Rücksprünge aufweisen können. Darüber hinaus hat der Schneidenträger Aussparungen für die Aufnahme austauschbarer Schneidplatten.

Es versteht sich, dass das durch die Schneidkanten der Schneidplatten definierte Schneidprofil das Profil des Schneidenträgers in Umfangsrichtung im Wesentlichen abdeckt, soweit dies nicht ohnehin schon innerhalb des Profils von schon vorgeformten und noch weiter zu profilierenden Nuten liegt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine teilweise weggeschnittene, perspektivische Ansicht eines Glockenfräsers,
- Figur 1a: eine Ausschnittvergrößerung aus Figur 1
- Figur 2: eine Gruppe entlang einer Kreisbahn angeordneter Schneidenträger ohne den zugehörigen Grundkörper und
- Figur 3: ein Ausführungsbeispiel eines Schneidenträgers in Innen- und Außenansicht,
- Figur 4: eine Ausführungsform mit einen Schneidenträger, der mit dem Wechselbacken in einem Stück hergestellt ist, und
- Figur 5: dieselbe Ausführungsform wie Figur 1, jedoch mit radial außerhalb des Schneidenträgers angeordnetem Wechselbacken..

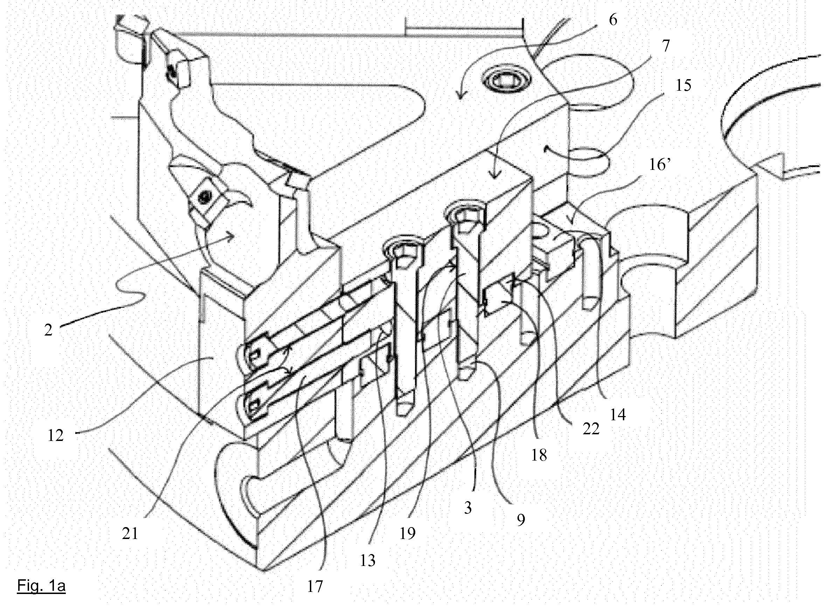

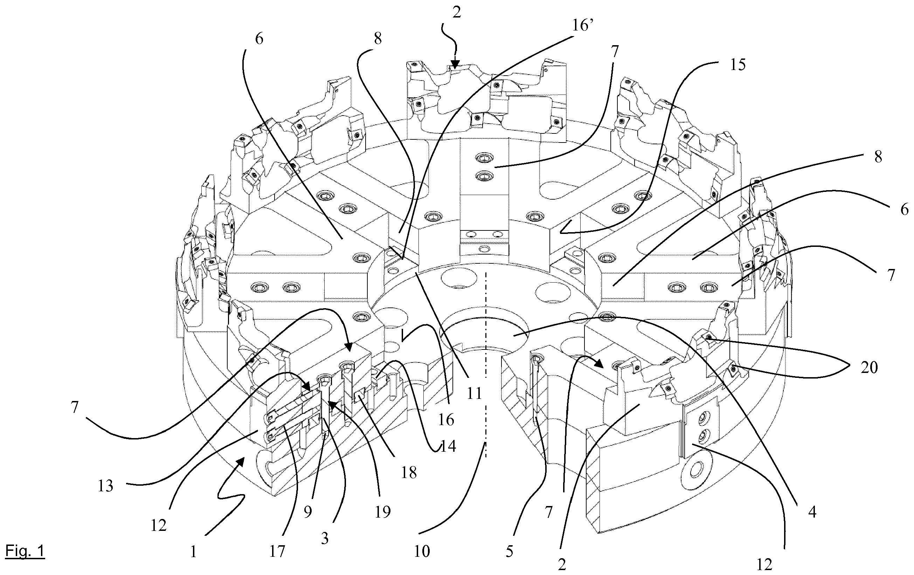

Man erkennt in Figur 1 einen Grundkörper 1, der im Wesentlichen die Form einer Kreisscheibe hat, die eine zentrale Bohrung 4 aufweist, so dass der Grundkörper 1 auf einer Spindel montiert werden kann, die um eine zentrale Achse 10 drehbar ist. Der Grundkörper 1 weist in einer sich im Wesentlichen radial erstreckenden Fläche 16 eine Reihe von Befestigungs- und Fixierbohrungen 5 auf, die teilweise der Befestigung und Fixierung von V- bzw. sektorförmigen Positioniermodulen 6 dienen, die jeweils im Abstand zum Zentrum endende Kreissegmente definieren und die in Umfangsrichtung in gleichmäßigen Abständen angeordnet sind. Die V-förmigen Positioniermodule 6 weisen äußere, annähernd radial verlaufende Flankenflächen 15 auf, die sich gleichzeitig senkrecht zur Oberfläche des kreisscheibenförmigen Grundkörpers und jeweils parallel zu einer unmittelbar gegenüberliegenden Flankenfläche 15 eines benachbarten Positioniermoduls 6 erstrecken. Die Flankenflächen 15 verlaufen nicht exakt radial, so dass die Positioniermodule 6 nur näherungsweise sektorförmig sind.

Dadurch werden zwischen den V-förmigen Segmenten durch die paarweise parallelen Flankenflächen 15 und die Oberfläche 16 des Grundkörpers 1 Nuten 8 definiert, in denen ein Wechselbacken 7 geführt ist. Der Wechselbacken 7 weist an seiner Unterseite quer zur Nut verlaufende Aussparungen zur Aufnahme von einem bzw. mehreren Nutsteinen 14 auf, die ihrerseits in entsprechende Quernuten 18 in Stegen11 auf der Oberfläche 16 des Grundkörpers 1 eingesetzt sind. Dadurch wird die radiale Position eines Wechselbacken 7 und eines daran montierten oder damit einstückig ausgebildeten Schneidenträgers 2, 2' exakt festgelegt. Der Wechselbacken 7 weist zusätzlich Durchgangsbohrungen 19 auf, die je nach Position des Wechselbackens 7 mit Gewindebohrungen 9 in dem Grundkörper 1 fluchten, so dass der Wechselbacken 7 mit Hilfe von Bolzen 3, die sich durch die Bohrungen 19 im Wechselbacken 7 in die Gewindebohrungen 9 hineinerstrecken, an bestimmten radialen Positionen innerhalb der Nut 8 fixierbar ist.

Auf der ansonsten ebenen, senkrecht zur Achse 10 verlaufenden Oberfläche 16 des Grundkorpers 1 sind radiale Stege 11 auf der Oberfläche des Grundkörpers 1 stehen geblieben bzw frei gefräst, zwischen welchen annähernd sektorförmige Aussparungen zur passgenauen Aufnahme der Positioniermodule 6 definiert sind. Insbesondere Quernuten 18 zur Aufnahme von Nutsteinen 14 lassen sich in solchen Stegen 11 einfacher ausbilden als in der ansonsten vollständig ebenen Oberfläche 16. Abgesehen von den in etwa radialen Stegen 11 sowie Befestigungsbohrungen und Quernuten 18 ist die den Schneidenträgern 2 und Positioniermodulen 6 zugewandte Fläche 16 des kreisscheibenförmigen Grundkörpers eben. Die Oberfläche der Stege 11 bildet einen zur Fläche 16 parallelen, ebenen Nutgrund 16' der Nut 8. Die Führung des Wechselbacken 7 in einer Nut 8 mit dem Kreuzversatz durch den bzw. die Nutenstein(e) 14 ermöglicht eine punktgenaue Positionierung des Schneidenträgers 2 in allen Richtungen.

Die Details der Ausführungsform gemäß Figur 1 sind in der Ausschnittvergrößerung gemäß Figur 1a teilweise noch etwas besser zu erkennen.

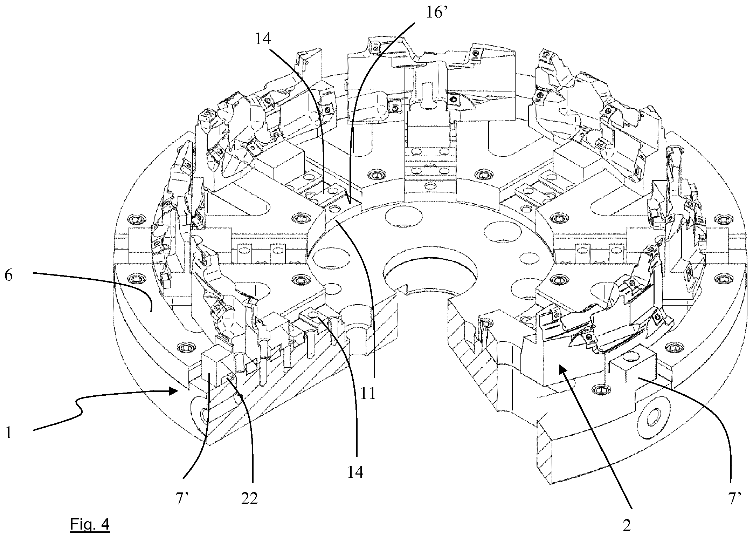

Der Wechselbacken 7, im konkreten Beispiel der Figur 1 dessen radial außen liegende Fläche, bildet in einer Ausführungsform wiederum einen Anschlag für einen Befestigungsabschnitt 12, an dem der Schneidenträger 2, 2' fixiert ist oder der mit dem Schneidenträger 2, 2' einstückig ausgebildet ist. Der Befestigungsabschnitt 12 hat den gleichen rechteckigen Querschnitt wie der Wechselbacken 7, so dass er radial von außen in dieselbe Nut 8 zwischen den Positioniermodulen 6 eingeschoben werden kann, in der sich bereits der Wechselbacken 7 befindet. In seiner radial nach außen gewandten Stirnseite weist der Wechselbacken 7 wiederum zwei Gewindebohrungen 13 auf, die mit zwei Durchgangsbohrungen 21 in dem Befestigungsabschnitt 12 fluchten, so dass der Befestigungsabschnitt 12 mit Hilfe von zwei Gewindebolzen 17 in einer wohldefinierten radialen Position sicher an dem Wechselbacken 7 befestigt werden kann. Wie bereits erwähnt, kann aber der Befestigungsabschnitt 12 (und somit auch der Schneidenträger 2, 2') mit dem Wechselbacken 7 einstückig ausgebildet sein (Figur 4).

Die Durchgangsbohrungen 21 für die Gewindebolzen 17 in dem Befestigungsabschnitt 12 können gegenüber den zugeordneten Gewindebohrungen im Wechselbacken 7 jeweils leicht versetzt oder geneigt sein, so dass die hindurchgeführten Gewindebolzen 17 beim Festziehen eine Kraft in Richtung des Nutgrundes 16' bzw. und in Richtung der Anlagefläche des Wechselbackens 7 ausüben, um die Anlage an diesen die Position des Schneidenträgers 2 exakt definierenden Flächen sicherzustellen.

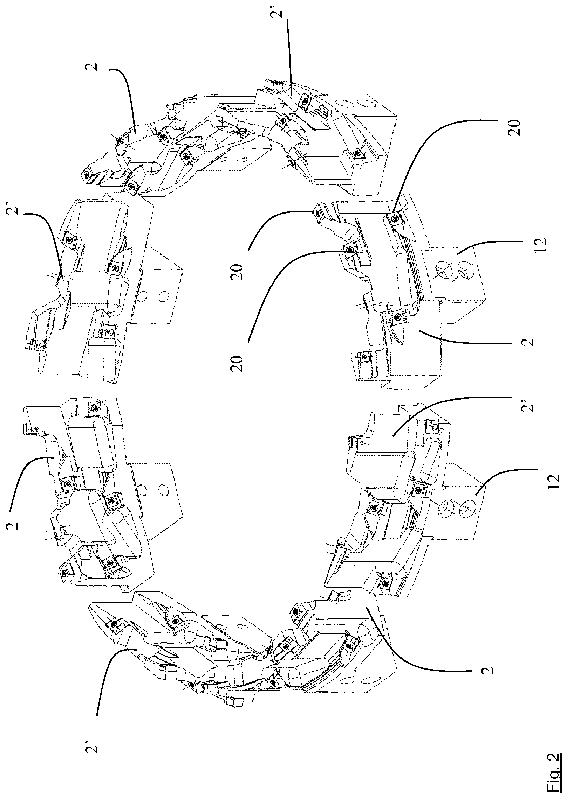

Der mit dem Befestigungsabschnitt 12 einstückig verbundene oder auf diesem montierte Scheidenträger 2, 2' hat die Grundform eines Hohlzylindersegmentes, das allerdings eine Vielzahl von Aussparungen, Vor- und Rücksprüngen und insgesamt ein sich axial weg von dem Befestigungsabschnitt verjüngendes Profil aufweist. In einer Ausführungsform erzeugen die Schneiden von jeweils zwei aufeinanderfolgenden Schneidenträgern 2, 2' gemeinsam das vollständige Nutprofil, so dass die Schneidenträger 2, 2' sich hinsichtlich der Anordnung der Schneidplatten 20 und der zugehörigen Aussparungen unterscheiden, ansonsten jedoch identisch miteinander ausgebildet sind. In der dargestellten Ausführungsform sind entlang des Umfanges eines kreisscheibenförmigen Grundkörpers 1 insgesamt acht Schneidenträger 2, 2' montiert, die in Figur 2 in einer entsprechenden kreisförmigen Anordnung und im Umfangsabstand zueinander ohne den kreisscheibenförmigen Grundkörper dargestellt sind.

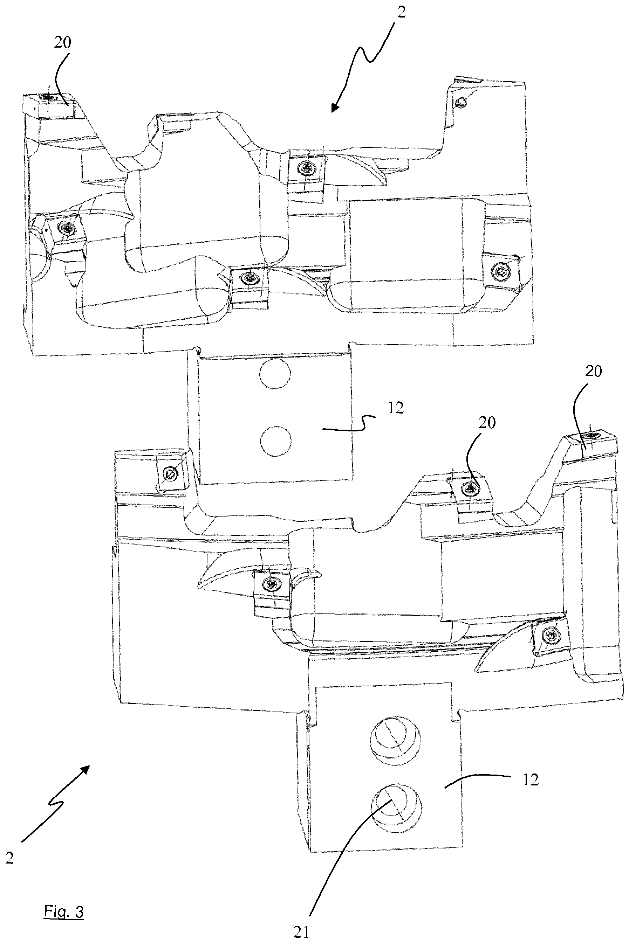

Der Schneidenträger 2 ist in einer radialen Innen- und einer radialen Außenansicht nochmals getrennt in Figur 3 dargestellt. Man erkennt, dass an dem Schneidenträger 2 in dieser Ausführungsform insgesamt 9 Schneidplatten 20 in entsprechenden Aussparungen und an verschiedenen axialen, radialen und Umfangspositionen angeordnet sind, so dass sie insgesamt mindestens einen Teil des Profils einer zu schneidenden Nut abdecken.

Die Schneidenträger 2, 2' (ohne die daran montierten Schneidplatten 20) könnten dabei so ausgestaltet sein, dass sie innerhalb eines gewissen (kleinen) Krümmungsbereichs durch Nuten unterschiedlicher Krümmungsradien hindurch laufen können, was es ermöglichen würde, mit demselben Schneidenträger den Wechselbacken 7 und den Befestigungsabschnitt 12 in radialer Richtung auf dem Grundkörper 1 zu verschieben und in einer neuen Position zu fixieren, in welcher der Glockenfräser dann Nuten mit einem entsprechend kleineren oder größeren Krümmungsradius schneiden kann.

Es versteht sich jedoch, dass hierzu entweder die Schneidplatten ausgetauscht oder jeweils neu justiert werden müssten, so dass sie das gewünschte Nutprofil auf einem entsprechend kleineren oder größeren Krümmungsradius erzeugen, auf den die Positionen der Schneidkanten der verschiedenen Schneidplatten 20 auf dem selben Schneidenträger abgestimmt sein müssen.

Bevorzugt sind jedoch die Schneidenträger jeweils nur für einen Nuttyp mit einem fest vorgegebenen Krümmungsradius vorgesehen und sie werden ausgetauscht, wenn Nuten mit einem anderen Krümmungsradius zu schneiden sind. Der Grundkörper einschließlich der Positioniermodule kann dabei jedoch nach wie vor für eine Mehrzahl unterschiedlicher Nutkrümmungsradien verwendet werden.

In Figur 4 ist eine weitere Ausführungsform der Erfindung dargestellt, in welcher die Schneidenträger 2 bzw. 2' jeweils einen als Wechselbacken 7' ausgebildeten Befestigungsabschnitt haben, mit welchem sie einstückig verbunden sind.

In der Unterseite des mit dem Schneidenträger 2 bzw. 2' einstückig ausgebildeten Wechselbacken 7' sind Aussparungen 22 zur Aufnahme von Nutensteinen 14 vorgesehen, sodass mit Hilfe der Nutensteine 14 der Wechselbacken 7' und damit automatisch auch der Schneidenträger 2 bzw. 2' an einer bestimmten radialen Position angeordnet und anschließend mit Hilfe von Gewindebolzen 3 ähnlich wie dies auch schon in Verbindung mit dem Wechselbacken 7 der Ausführungsform gemäß Figur 1 beschrieben wurde.

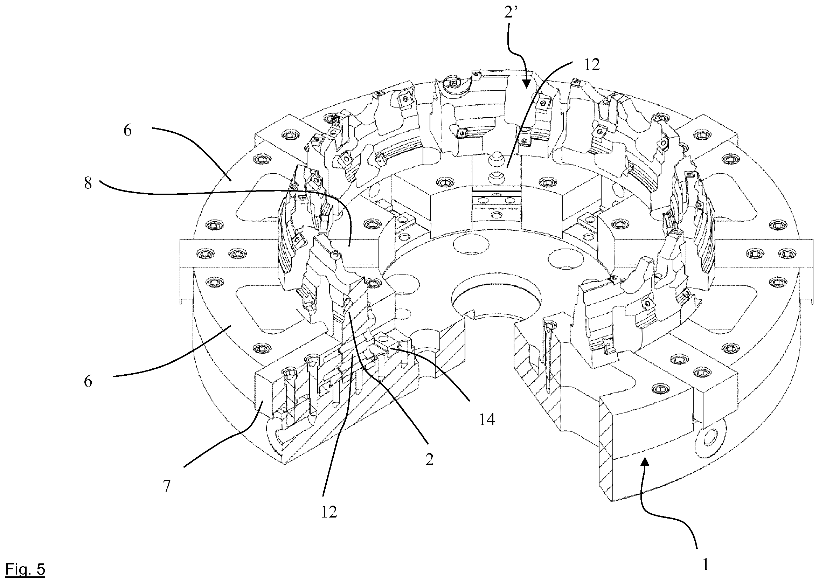

Figur 5 zeigt nochmals die gleiche Ausführungsform wie Figur 1, wobei in diesem Fall jedoch die Schneidenträger 2, 2' auf einem deutlich kleineren Radius angeordnet sind. Da die Nuten 8, die zwischen den Positioniermodulen 6 gebildet werden in Abstand zum Zentrum des Grundkörpers 1 enden und radial einwärts wie auswärts offen sind, ist es möglich, die Position von Wechselbacken 7 und Befestigungsabschnitt 12 gegenüber der Darstellung in Figur 1 zu vertauschen und den Befestigungsabschnitt 12 radial von innen her mit dem durch Nutensteine 14 und Schraubbolzen 3 exakt positionierten und befestigten Wechselbacken 7 zu verbinden, wodurch auch der Befestigungsabschnitt 12 und damit der zugehörige Schneidenträger 2 bzw. 2' an einer festen radialen Position fixiert ist. Diese Ausgestaltung und die Vertauschung der Positionen von Wechselbacken 7 und Befestigungsabschnitt 12 ermöglicht es, die einzelnen Schneidenträger 2, 2' auf unterschiedlichen Radien zu positionieren, die zwischen dem Radius des inneren Endes der Nut 8 und dem äußeren Ende der Nut 8 variieren. Mit Hilfe eines solchen Grundkörpers und der entsprechend ausgetauschten und an den geeigneten radialen Positionen fixierten Schneidenträger 2, 2' können demzufolge bogenförmige Nuten erzeugt werden, deren Bogenradius um beispielsweise bis zu 200 mm variieren kann.

Dies bedeutet eine erhebliche Ersparnis an Werkzeugkosten, wenn ein entsprechender Bereich von Radien für unterschiedliche bogenförmige Nuten abgedeckt werden muss.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

### Bezugszeichen

- 1: Grundkörper
- 2,2': Schneidenträger
- 3: Gewindebolzen
- 4: zentrale Bohrung
- 5: Befestigungsbohrung
- 6: Positioniermodul
- 7: Wechselbacken
- 8: Nut
- 9: Gewindebohrung
- 10: Achse
- 11: Steg
- 12: Befestigungsabschnitt
- 13: Gewindebohrung
- 14: Nutenstein
- 15: Flankenfläche
- 16: Oberfläche des Grundkörpers
- 16': Nutgrund
- 17: Gewindebolzen
- 18: Quernut
- 19: Durchgangsbohrung
- 20: Schneidplatten
- 21: Durchgangsbohrung
- 22: Aussparung

## Patentansprüche

1. Glockenfräser zur Herstellung von profilierten, bogenförmigen Nuten, mit einem kreisscheibenförmigen Grundkörper (1) und mehreren, sich im wesentlichen senkrecht zur Ebene des Grundkörpers erstreckenden Schneidenträgern (2), die entlang einer Kreisbahn um das Zentrum des Grundkörpers in Umfangsrichtung hintereinander angeordnet sind, wobei jeder Schneidenträger die Grundform eines bogenförmigen Segmentes eines Hohlzylinders hat und Aussparungen (5) für die Aufnahme austauschbarer Schneidplatten (20) aufweist, wobei die radiale Dicke des Segmentes entlang der axialen Erstreckung des Schneidenträgers variiert **dadurch gekennzeichnet, dass** die Schneidenträger (2) lösbar an dem Grundkörper montiert sind und dass an dem Grundkörper Positioniereinrichtungen vorgesehen sind, die eine Montage der Schneidenträger in mehreren voneinander verschiedenen radialen Abständen an dem Grundkörper ermöglichen. wobei die Positioniereinrichtungen in der Draufsicht sektorförmige Positioniermodule (6) mit axial und überwiegend radial verlaufenden Flankenflächen aufweisen, die auf einer im Wesentlichen senkrecht zur Rotationsachse verlaufenden Fläche des Grundkörpers derart montiert sind, dass die einander zugewandten Flankenflächen benachbarter Positioniermodule parallel verlaufen und mit der senkrecht zur Rotationsachse und zu den Flankenflächen (15) verlaufenden Fläche des Grundkörpers eine im Querschnitt rechteckige Nut (8) definieren und dass die Flankenflächen und/oder der Nutgrund mindestens eine Aussparung zur Aufnahme mindestens eines Nutsteins (14) aufweisen.

2. Glockenfräser nach Anspruch 1, **dadurch gekennzeichnet, dass** die Positioniereinrichtungen an dem Grundkörper und konzentrisch zu dessen Achse lösbar montierbare Positioniermodule sind.

3. Glockenfräser nach einem der vorstehenden Ansprüche, **dadurch gekennzeichnet, dass** die Positioniereinrichtungen sich jeweils radial erstreckende Nuten auf dem Grundkörper definieren.

4. Glockenfräser nach einem der vorstehenden Ansprüche, **dadurch gekennzeichnet, dass** zwischen je einem Schneidenträger und dem Grundkörper ein Wechselbacken (7) angeordnet ist, welcher eine Schnittstelle zwischen Grundkörper (1) und Schneidenträger (2) definiert und welcher an unterschiedlichen radialen Positionen an dem Grundkörper fixierbar ist, wobei der Schneidenträger an dem Wechselbacken montierbar oder mit diesem einstückig ausgebildet ist.

5. Glockenfräser nach einem der vorstehenden Ansprüche, **dadurch gekennzeichnet, dass** der Wechselbacken mit Kreuzversatz an den Positioniereinrichtungen fixierbar ist,

6. Glockenfräser nach einem der vorstehenden Ansprüche, soweit mit Anspruch 4 kombiniert, **dadurch gekennzeichnet, dass** der Wechselbacken einen Querschnitt aufweist, welcher dem Querschnitt der von den Positioniereinrichtungen definierten Nuten entspricht.

7. Glockenfräser nach Anspruch 1, **dadurch gekennzeichnet, dass** der Wechselbacken an seinen Seitenflanken und/oder seiner Unterseite mindestens eine Aussparung zur Aufnahme eines Nutsteins oder mindestens einen als Nutstein dienenden integralen Vorsprung aufweist.

8. Glockenfräser nach einem der vorstehenden Ansprüche, **dadurch gekennzeichnet, dass** der Schneidenträger in einem die Achse des Grundkörpers enthaltenden Schnitt zumindest teilweise ein in etwa V-förmiges Profil aufweist, dessen Spitze von dem Grundkörper weg weist.

9. Glockenfräser nach einem der vorstehenden Ansprüche, **dadurch gekennzeichnet, dass** das Gesamtprofil der durch den Glockenfräser erzeugten, bogenförmigen Nut durch die Gesamtheit der Schneiden zweier aufeinanderfolgender Schneidenträger gebildet wird.

## Claims

1. A bell-shaped milling cutter for producing profiled, arcuate grooves, comprising a main body (1) in the form of a circular disk and a plurality of cutting edge carriers (2) which extend substantially perpendicularly to the plane of the main body and which are arranged in succession in the peripheral direction along a circular path about the center of the main body, wherein each cutting edge carrier is of the basic shape of an arcuate segment of a hollow cylinder, and has recesses (5) for receiving interchangeable cutting bits (20), wherein the radial thickness of the segment varies along the axial extent of the cutting edge carrier, **characterised in that** the cutting edge carriers (2) are releasably mounted to the main body and that at the main body positioning devices are provided which positioning devices permit mounting of the cutting edge carriers in a plurality of mutually different radial spacings on the main body, wherein the positioning devices in plan view have sector-shaped positioning modules (6) with axially and predominantly radially extending flank surfaces which are mounted on a surface of the main body, which surface extends substantially perpendicularly to the axis of rotation, in such a way that the mutually facing flank surfaces of adjacent positioning modules extend parallel and define a groove (8) of rectangular cross-section with the surface of the main body, which surface extends perpendicularly to the axis of rotation and to the flank surfaces (15), and that the flank surfaces and/or the groove bottom have at least one recess for receiving at least one sliding block (14).

2. A bell-shaped milling cutter as set forth in claim 1 **characterised in that** the positioning devices are positioning modules which can be mounted releasably to the main body and concentrically relative to the axis thereof.

3. A bell-shaped milling cutter as set forth in one of the preceding claims **characterised in that** the positioning devices define respective radially extending grooves on the main body.

4. A bell-shaped milling cutter as set forth in one of the preceding claims **characterised in that** arranged between a respective cutting edge carrier and the main body is a change jaw (7) which defines an interface between the main body (1) and the cutting edge carrier (2) and which can be fixed to the main body at different radial positions, wherein the cutting edge carrier is adapted to be mountable to the change jaw or is in one piece therewith.

5. A bell-shaped milling cutter as set forth in one of the preceding claims **characterised in that** the change jaw can be fixed with tongue and groove to the positioning devices.

6. A bell-shaped milling cutter as set forth in one of the preceding claims insofar as combined with claim 4 **characterised in that** the change jaw has a cross-section corresponding to the cross-section of the grooves defined by the positioning devices.

7. A bell-shaped milling cutter as set forth in claim 1 **characterised in that** the change jaw at its side flanks and/or at its underside has at least one recess for receiving a sliding block or at least one integral projection serving as a sliding block.

8. A bell-shaped milling cutter as set forth in one of the preceding claims **characterised in that** in a section containing the axis of the main body the cutting edge carrier at least partially is of an approximately V-shaped profile, the tip of which faces away from the main body.

9. A bell-shaped milling cutter as set forth in one of the preceding claims **characterised in that** the overall profile of the arcuate groove produced by the bell-shaped milling cutter is formed by the totality of the cutting edges of two successive cutting edge carriers.

## Revendications

1. Fraise cloche destinée à la production de rainures profilées en forme d'arc, avec un corps de base (1) en forme de disque et plusieurs supports de lame (2) qui s'étendent de manière essentiellement perpendiculaire au plan du corps de base et sont agencés les uns derrière les autres dans une direction circonférentielle le long d'un tracé circulaire autour du centre du corps de base, chaque support de lame ayant la forme de base d'un segment en forme d'arc d'un cylindre creux et présente des évidements (5) destinés à recevoir des plaquettes de coupe (20) interchangeables, l'épaisseur radiale du segment variant le long de l'étendue axiale du support de lame, **caractérisée en ce que** les supports de lame (2) sont montés de manière amovible sur le corps de base et **en ce que** des dispositifs de positionnement qui permettent un montage des supports de lame sur le corps de base avec plusieurs espacements radiaux différents les uns des autres sont prévus sur le corps de base, les dispositifs de positionnement vus de dessus présentant des modules de positionnement (6) en forme de secteur, avec des surfaces latérales s'étendant de manière axiale et principalement radiale, qui sont montés sur une surface du corps de base s'étendant de manière essentiellement perpendiculaire à l'axe de rotation de telle manière que les surfaces latérales tournées les unes vers les autres de modules de positionnement adjacents s'étendent de manière parallèle et définissent avec la surface du corps de base s'étendant de manière perpendiculaire à l'axe de rotation et aux surfaces latérales (15) une rainure (8) de section transversale rectangulaire et **en ce que** les surfaces latérales et/ou le fond de rainure présentent au moins un évidement destiné à recevoir au moins un bloc coulissant (14).

2. Fraise cloche selon la revendication 1, **caractérisée en ce que** les dispositifs de positionnement sont des modules de positionnement pouvant être montés de manière amovible sur le corps de base et de manière concentrique par rapport à l'axe dudit corps de base.

3. Fraise cloche selon l'une quelconque des revendications précédentes, **caractérisée en ce que** les dispositifs de positionnement définissent sur le corps de base des rainures s'étendant respectivement de manière radiale.

4. Fraise cloche selon l'une quelconque des revendications précédentes, **caractérisée en ce qu'**entre chaque support de lame et le corps de base est agencé un mors interchangeable (7) qui définit une interface entre le corps de base (1) et le support de lame (2) et qui peut être fixé sur le corps de base à des positions radiales différentes, le support de lame pouvant être monté sur le mors interchangeable ou étant réalisé d'un seul tenant avec ledit mors.

5. Fraise cloche selon l'une quelconque des revendications précédentes, **caractérisée en ce que** le mors interchangeable peut être fixé sur les dispositifs de positionnement par assemblage de rainure et nervure transversale.

6. Fraise cloche selon l'une quelconque des revendications précédentes, lorsqu'elle est combinée avec la revendication 4, **caractérisée en ce que** le mors interchangeable présente une section transversale qui correspond à la section transversale des rainures définies par les dispositifs de positionnement.

7. Fraise cloche selon la revendication 1, **caractérisée en ce que** le mors interchangeable présente sur ses flancs latéraux et/ou sa face inférieure au moins un évidement destiné à recevoir un bloc coulissant ou au moins une saillie intégrée servant de bloc coulissant.

8. Fraise cloche selon l'une quelconque des revendications précédentes, **caractérisée en ce que** le support de lame présente, dans une section contenant l'axe du corps de base, au moins partiellement un profil approximativement en forme de V dont la pointe indique une direction s'éloignant du corps de base.

9. Fraise cloche selon l'une quelconque des revendications précédentes, **caractérisée en ce que** le profil global de la rainure en forme d'arc produite par la fraise cloche est formé grâce à l'ensemble des lames de deux supports de lame successifs.
